# EUROPEAN PATENT APPLICATION

(11) **EP 3 905 588 A1**
(43) Date of publication of application: **03.11.2021**
(21) Application number: 19902781.4
(22) Date of filing: 19.12.2019
(51) Int. Cl.: H04L 12/24

(54) **CLOUD PLATFORM DEPLOYMENT METHOD AND APPARATUS, SERVER AND STORAGE MEDIUM**

(30) Priority: 26.12.2018 CN 201811599579
(71) Applicant: ZTE Corporation, Shenzhen, Guangdong 518057 (CN)
(72) Inventor: MA, Lijun, Shenzhen, Guangdong 518057 (CN)
(74) Representative: Deambrogi, Edgardo
(86) International application number: PCT/CN2019/126679
(87) International publication number: WO 2020/135228

(57) **Abstract**

Provided are a cloud platform deployment method and apparatus, a server and a storage medium. The method includes: acquiring a deployment instruction; and correspondingly deploying, according to the deployment instruction and a node type attribute and/or a role aggregation attribute in a role attribute of a set role, a role to be deployed to a target controller node. The role attribute includes the node type attribute and/or a role aggregation attribute, so that automatic deployment of a role to a target controller node group can be directly completed according to a node type supported by the role, or migration and aggregation of the role can be completed according to the role aggregation attribute of the role. The deployment difficulty and complexity of a cloud platform can be simplified, and the deployment flexibility of the cloud platform is improved.

## Description

### Technical Field

The present disclosure relates to cloud computing cluster technologies, and in particular, to a cloud platform deployment method and apparatus, a server and a storage medium.

### Background

A cloud computing cluster environment, also referred to as deployment of a cloud platform, generally refers to a process of installing and activating related services and components of a cloud computing management system on a server.

In the related art, the described installing process is generally oriented to the entirety of the cloud computing management system, that is, the management service of the whole cloud computing management system is deployed and installed as a whole. When adopting this installing process, the deployment complexity is relatively high, and it is difficult to expand and perform configuration modification after the deployment is completed, therefore the flexibility of this installing process is relatively poor, and it is difficult for this installing process to meet the performance expansion requirements of the cloud computing management system.

### Summary

Embodiments of the present disclosure provide a cloud platform deployment method and apparatus, a server and a storage medium, which can solve the existing technical problem.

According to a first aspect, some embodiments of the present disclosure provide a cloud platform deployment method, including: acquiring a deployment instruction; and correspondingly deploying, according to the deployment instruction and a node type attribute and/or a role aggregation attribute in a role attribute of a set role, a role to be deployed to a target controller node.

According to a second aspect, some embodiments of the present disclosure provide a cloud platform deployment apparatus, including: an acquisition module, configured to acquire a deployment instruction; and a deployment module, configured to correspondingly deploy, according to the deployment instruction and a node type attribute and/or a role aggregation attribute in a role attribute of a set role, a role to be deployed to a target controller node.

According to a third aspect, some embodiments of the present disclosure provide a server, including a processor and a memory configured to store a computer program operable on the processor; the processor is configured to execute the cloud platform deployment method described in the embodiments of the present disclosure when running the computer program.

According to a fourth aspect, some embodiments of the present disclosure provide a storage medium. The storage medium stores an executable instruction. The executable instruction is configured to, when being executed by a processor, perform the cloud platform deployment method according to the embodiments of the present disclosure.

### Brief Description of the Drawings

Fig. 1 is a schematic diagram of a physical networking environment of a cloud platform according to some embodiments of the present disclosure.
Fig. 2 is a schematic flowchart of a cloud platform deployment method according to some embodiments of the present disclosure.
Fig. 3 is a schematic diagram of pre-defined roles according to some embodiments of the present disclosure.
Fig. 4 is a schematic diagram of deploying roles to controller nodes in a cloud platform deployment method according to some embodiments of the present disclosure.
Fig. 5 is a schematic diagram of role migration in a cloud platform deployment method according to some embodiments of the present disclosure.
Fig. 6 is a schematic flowchart of a cloud platform deployment method according to some other embodiments of the present disclosure.
Fig. 7 is a schematic flowchart of a cloud platform deployment method according to still other embodiments of the present disclosure.
Fig. 8 is a schematic structural diagram of a cloud platform deployment apparatus according to some embodiments of the present disclosure.
Fig. 9 is a schematic structural diagram of a server according to some embodiments of the present disclosure.

### Detailed Description

The technical solutions of the embodiments of the present disclosure will be further described in detail below in conjunction with the accompanying drawings and exemplary embodiments. Unless otherwise defined, all technical and scientific terms used herein have the same meaning as commonly understood by a person having ordinary skill in the art to which the present disclosure belongs. The terminology used herein in the description of the present disclosure is for the purpose of describing exemplary embodiments only and is not intended to limit the present disclosure. As used herein, the term "and/or" includes any one of and all combinations of one or more of the associated listed items.

In the following description, references to "some embodiments" describe a subset of all possible embodiments. It should be understood that "some embodiments" may be the same subset or different subsets of all possible embodiments, and may be combined with each other in a case where there is no conflict.

Before describing the present disclosure in further detail, nouns and terms involved in the embodiments of the present disclosure are described, and nouns and terms involved in the embodiments of the present disclosure are applicable to the following explanations.
1) Cloud platform, also known as a cloud computing management system, refers to a multi-level and omnidirectional cloud computing management system formed by implementing a one-stop service with a full service period by constructing an infrastructure as a service (Iaas), a platform as a service (Paas) and a software as a service (SaaS). The infrastructure as a service means that a user can acquire a service from a perfect computer infrastructure through a network. The platform as a service means that a platform for software development is provided as a service and submitted to a user in a SaaS mode. The software as a service refers to a mode of providing software through a network, and a user can manage operating activities of a cloud enterprise by using Web-based software rent from a provider, without having to buy the software.
2) Roles refer to grouping definitions based on related services and components contained in a cloud computing management system. For example, a specific combination of services can be defined as a specific role, and each role can be used for representing an abstraction of a group of services.
3) High Availability (HA) service operation mode refers to an operation mode in which there are generally two or more nodes, which are classified into an active node and one or more backup nodes. Generally, a node executing a service is referred to as an active node; and a node serving as a backup for an active node is referred to as a backup node. When a problem occurs in the active node, which causes that a running service (task) cannot run normally, the backup node detects this abnormality, and immediately executes the service in place of the active node, thereby implementing service continuity.
4) Load Balance (LB) service running mode refers to a cluster architecture that realizes shared storage based on a Director Server. When a request of a user is received, the request of the user is directly sent to the Director Server, and the Director Server intelligently and evenly distributes the request of the user to a real server at a rear end according to a pre-set algorithm. By sharing a storage resource, it is ensured that data requested by all users is the same.

In the related art, in a cloud platform deployment process, an installation process of related services and components on a server is generally oriented to the entirety of cloud computing management system. Taking the deployment of an OpenStack cloud computing management system as an example, a common installation process includes the following operations S1 to S7.

At operation S1, basic hardware configuration is performed. The basic hardware configuration includes server BIOS (Basic Input/Output System, server boot and configuration tool) configuration, and basic configuration on network and storage device.

At operation S2, an operating system (OS) of the server is installed, and OS basic configuration is performed.

At operation S3, software and services related to each controller node are installed on a controller node host.

At operation S4, if a current environment is a two-control or three-control environment, the software installation on each server is completed one by one.

At operation S5, HA (High Availability) configuration, LB (Load Balance) configuration, and service related configuration of OpenStack cloud computing management system are performed.

At operation S6, computing-related services are installed on a compute node host. The compute node and the controller node may be deployed integrally, that is, the computing-related service can be deployed on the controller node.

At operation S7, as the compute nodes managed by the controller nodes gradually increase in scale, controller nodes need to be added to an original two-control or three-control environment, so that some services can be migrated to a new controller node, and the service scale of the cloud computing management system is expanded by increasing the number of controller nodes.

In the described deployment process, the management service of the whole cloud computing management system is deployed and installed as a whole, and the consequence caused by this deployment process is that it is difficult to expand and perform configuration modification after the installation is completed, and a large-scale deployment scenario cannot be supported.

In order to solve the described problem, the inventor finds in the study that the services running on the controller nodes and the compute nodes can be divided in a certain way when deploying the cloud computing management system. For example, taking an OpenStack as an example, a service running on a controller node can be defined as a control role, and some public services such as image management, authentication management, database, and message server can be respectively defined as corresponding service roles. In this way, the landing and the execution of the cloud computing management services on the server can be flexibly controlled. Meanwhile, in a scenario where capacity of the controller nodes is expanded, a limited expansion capability is supported, for example, different roles may be distributed on different servers, so as to increase the processing capability of the cloud management system. However, when a large-scale cloud computing management system is deployed, because the number of controller nodes involved is relatively large, the deployment solution still has the following problems.

First, if a main service of a controller node is defined as a control role, service deployment cannot be flexibly adjusted when a bottlenecked service appears as a control role in a large-scale scenario. At present, a common solution in the industry is to separate such services and predefine the services as individual roles in a deployment tool, which leads to too many roles and a complicated deployment solution.

Second, in a large-scale cloud environment scenario, the number of controller nodes generally reaches or exceeds six. Currently, a common operation manner in the industry is dragging a role onto a controller node host or selecting a corresponding landing controller node host specifically for the role. No matter which manner is adopted, repeated actions of operations are required, resulting in increased deployment complexity.

Based on this, the embodiments of the present disclosure adds a node type attribute and/or a role aggregation attribute to a role-based role attribute, and deploys the roles to be deployed correspondingly to target controller nodes according to respective role attributes of the roles to be deployed. The deployment of the roles to be deployed correspondingly according to the node type attribute in the respective role attributes of the roles to be deployed facilitates automatic deployment of the roles to the target controller nodes directly according to the node type supported by each role. In addition, deployment may also be performed according to the role aggregation attribute in the role attribute, so that migration and aggregation of roles can be completed according to role aggregation attributes of the roles. Both of the described deployment solutions can simplify deployment difficulty and complexity of the cloud platform and improve deployment flexibility. In addition, a controller node group containing a plurality of controller nodes can be pre-defined, and the deployment of the roles may be performed according to the controller node group, which can ensure the consistency of the configuration of a service on executing nodes of the service, simplify the deployment difficulty and complexity of a cloud platform, and support scenarios in which the numbers of controller node hosts in different controller node groups are different, thereby improving the deployment flexibility.

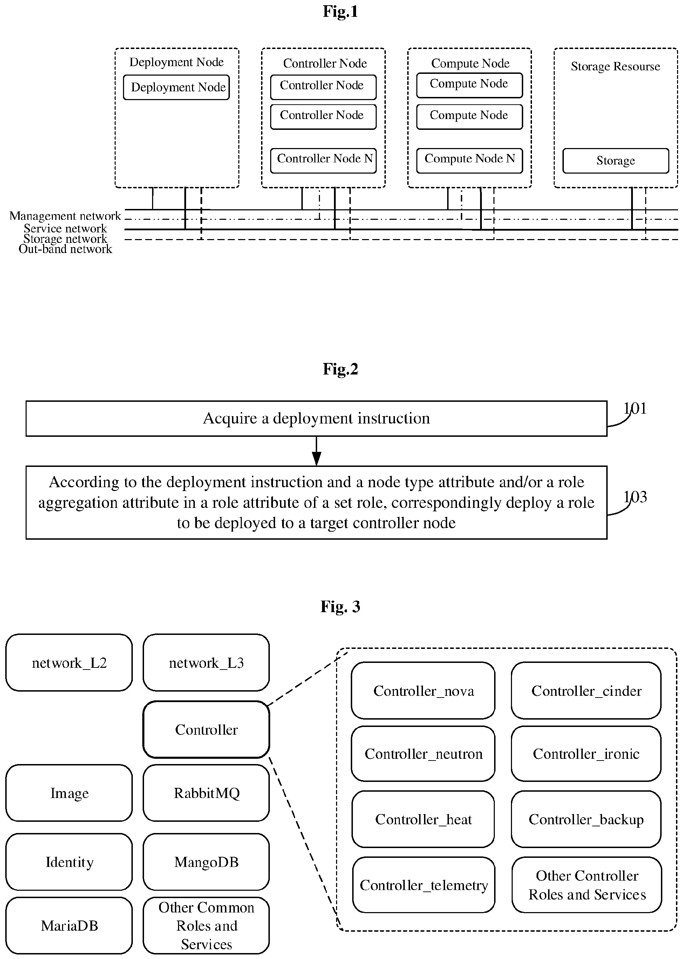

Please refer to Fig. 1, which is a schematic structural diagram of a physical networking environment of a cloud platform according to some embodiments of the present disclosure, the physical networking environment includes a deployment node, controller nodes, compute nodes, and storage resources. The deployment node may include one or more physical servers (Deployment Node 1 in Fig. 1) configured to implement the cloud platform deployment method provided in the embodiments of the present disclosure. The controller nodes may include one or more controller node groups, such as Control Group 1, Control Group 2,... , Control Group N, and each controller node group includes one or more controller node hosts for executing a specific combination of services. The deployment node and the controller node may be combined, that is, the cloud platform deployment method provided by the embodiments of the present disclosure, which is implemented by the deployment node, may be executed as a service by the controller node. The compute nodes are used for providing virtual resources, and the virtual resources may be divided into multiple groups each including a plurality of compute nodes, such as a Computer Node 1, a Computer Node 2, ......, and a Computer Node M. The storage resources include one or more physical storage devices (Storage) configured to provide corresponding storage resources for the operation of the controller nodes and the compute nodes.

Please refer to Fig. 2, which is a schematic flowchart of a cloud platform deployment method according to some embodiments of the present disclosure. The cloud platform deployment method may be applied to a deployment node or a controller node in a cloud platform as shown in Fig. 1. The method includes operations 101 and 102 which are described in detail as follows.

At operation 101, a deployment instruction is acquired.

Herein, the deployment instruction refers to a relevant instruction for triggering the deployment of the cloud platform. The deployment of the cloud platform may include one or more deployment stages such as role deployment, service activation, and capacity expansion deployment. The corresponding deployment instruction may include a relevant instruction for triggering the execution of role deployment, a relevant instruction for triggering the execution of service activation, and a relevant instruction for triggering the execution of capacity expansion deployment.

The deployment instruction may be acquired based on one or more human-computer interaction operations received by one or more software application interfaces, and a form of the human-computer interaction operations for acquiring the deployment instruction is not limited. Taking the deployment instruction being the relevant instruction for triggering the execution of role deployment as an example, the deployment instruction may be acquired by receiving a touch operation on a role deployment virtual key provided by a software application interface. Taking the deployment instruction being the relevant instruction for triggering the execution of service activation as an example, the deployment instruction may be acquired by receiving an operation of inputting one or more parameters complying with set requirements through a parameter configuration window provided by a software application interface, and receiving a corresponding touch operation on a service activation virtual key provided by the software application interface. Alternatively, taking the deployment instruction being the relevant instruction for triggering the execution of capacity expansion deployment as an example, the deployment instruction may be acquired by receiving a corresponding touch operation on a role migration virtual key provided by the software application interface, and receiving a selection operation on the role to be migrated through the role list provided by the software application interface.

At operation 102, according to the deployment instruction and a node type attribute and/or a role aggregation attribute in a role attribute of a set role, a role to be deployed is correspondingly deployed to a target controller node.

Here, a role refers to a group definition based on related services and components included in a cloud computing management system. For example, a specific combination of services may be defined as a specific role, and each role may be used for representing an abstraction of a group of services. The attribute refers to a description of an object from an abstract aspect, and is a general name of a relationship between properties of the object and the object. The role attribute refers to a description of the role from an abstract aspect, and is used for representing a relationship between the features of the role and the role. The node type attribute is used for representing a node type supported by the role, such as a controller node and/or a compute node. The role aggregation attribute is used for representing whether the role is an aggregated role or a non-aggregated role, wherein the same aggregated role may include a plurality of specified sub-roles. The definition of the aggregated roles can simplify the configuration of a role list, thereby simplifying the deployment complexity.

In the above embodiments of the present disclosure, the role to be deployed is correspondingly deployed to the target controller node according to the node type attribute and/or the role aggregation attribute in the role attribute of the set role. The role attribute is set to include the node type attribute and/or the role aggregation attribute. The node type supported by the corresponding role can be determined based on the node type attribute, and/or the sub-role associated with the corresponding role can be determined based on the role aggregation attribute. In this way, automatic deployment of the role to the target controller node can be directly completed according to a node type supported by the role, or migration and aggregation of the role can be completed according to the role aggregation attribute of the role. The deployment difficulty and complexity of a cloud platform can be simplified, and the deployment flexibility is improved.

In some embodiments, when the role to be deployed is deployed to a controller node, the role to be deployed may be correspondingly deployed to the target controller node according to a controller node group. The process may include an operation that the role to be deployed is correspondingly deployed to a target controller node group which includes a plurality of controller nodes.

Here, the controller node group refers to that the controller nodes are defined in groups, and each controller node group includes a designated number of controller node hosts. By correspondingly deploying the role to be deployed to the target controller node group, operations on the role can all be based on the controller node group rather than a single controller node, so as to ensure the consistency of service configurations of all the controller nodes in the same controller node group, thereby reducing the probability of configuration errors and reducing the number of configuration operations.

In the foregoing embodiments of the present disclosure, the role deployment is performed according to a controller node group, which can ensure the consistency of configurations of a service on executing nodes of the service, so that difficulty and complexity in deployment of a cloud platform can be simplified. In addition, scenarios in which the numbers of controller node hosts in different controller node groups are different are supported, and deployment flexibility is improved.

Please refer to Fig. 3, which is a schematic diagram of roles according to some embodiments of the present disclosure. Taking an OpenStack cloud platform as an example, the roles are defined based on specific service combinations. The following roles may be included.
1) Identity, authentication and authorization service.
2) Image, image management service.
3) network_L2, Ethernet L2 service.
4) network_L3, Ethernet L3 service.
5) Rabbit MQ, message service.
6) MariaDB, database management system service.
7) MangoDB, database service of NoSQL.
8) Controller, controller node service. The role is an aggregated role including the following sub-roles.
   8.1) Controller_nova, which is used to provide virtual services according to user demand in the whole life cycle of managing a virtual machine instance by a single user or managing a virtual machine instance based on group management. Controller_nova may be used to take charge of operations such as virtual machine creation, power-on, power-off, suspension, pause, adjustment, migration, restart, destruction, and to configure information specifications such as CPU and memory.
   8.2) Controller_cinder, which provides a stable data block storage service for running instances. The plug-in drive architecture of Controller_cinder facilitates creation and management of block devices, such as creating a volume, deleting a volume, mounting a volume on an instance, and dismounting a volume from an instance.
   8.3) Controller_neutron, which provides a network virtualization technology of cloud computing, and provides network connection services for other services of OpenStack. Controller_neutron provides an interface for a user, can define a Network, a Subnet and a Router, and can configure dynamic host configuration protocol (DHCP), domain name system (DNS), load balancing and Ethernet (L3) services. The network supports generic routing encapsulation protocol (GRE) and virtual local area network (VLAN).
   8.4) Controller_ironic. Deployment of a physical machine and deployment of a virtual machine are both triggered by a nova by means of creating a virtual machine, but the drive for a nova-scheduler and a nova-compute of a physical machine is different from that of a virtual machine. The bottom-layer driver of the virtual machine uses a virtualization technology of an application program interface (libvirt) of a virtualization management platform, while the physical machine uses an Ironic technology. The Ironic can be regarded as a set of intermediate software layer application program interfaces (Hypervisor API), and the function of the Ironic is similar to that of the libvirt.
   8.5) Controller_heat, which provides a collaborative deployment mode defined by a template and implements automatic deployment of a software running environment (computing, storage and network resources) of a cloud infrastructure.
   8.6) Controller_backup, which provides a data backup service.
   8.7) Controller_telemetry, which is a technology for remotely collecting data from a physical device or a virtual device at a high speed. The device initiatively sends device data information to a collector by using a Push Mode, so as to provide a more real-time and high-speed data collection function.
   8.8) Other Controller Roles and Services, other services are not enumerated.
9) Other Common Roles and Services, other services are not enumerated.

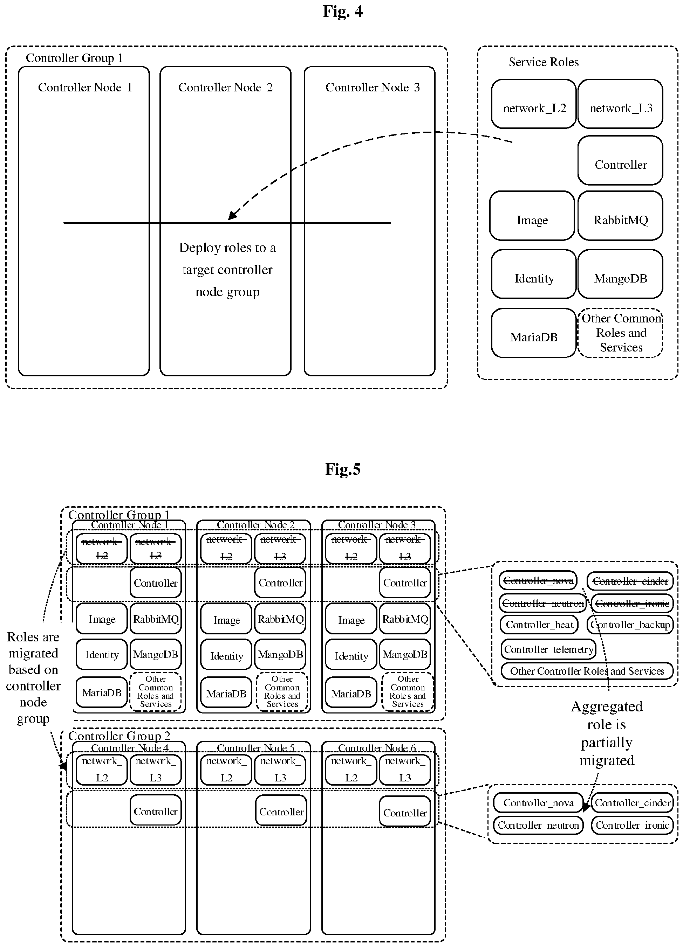

Please refer to Fig. 4, which is a schematic diagram of deploying roles to controller nodes according to some embodiments of the present disclosure. Still taking an OpenStack cloud platform as an example, Service Roles are defined based on specific service combinations, and the Service Roles include Identity, Image, network_L2, network_L3, RabbitMQ, MariaDB, MangoDB, Controller, and Other Common Roles and Services. A defined controller node group, denoted as Controller Group 1, includes a plurality of controller nodes, for example, Controller Node 1, Controller Node 2 and Controller Node 3. The Service Roles are integrally deployed into the target controller node group, i.e., Controller Group 1, at a time. The service configurations of all the controller nodes, i.e., Controller Node 1, Controller Node 2 and Controller Node 3, in the target controller node group, i.e., Controller Group 1, are ensured to be the same, thereby reducing the probability of configuration error and reducing the number of configuration operations.

In some embodiments, the operation that the role to be deployed is correspondingly deployed to the target controller node according to the deployment instruction, and the node type attribute and/or the role aggregation attribute in the role attribute may be implemented in the following manner. In a case where the role attribute includes the node type attribute and it is determined, according to the node type attribute, that a node type supported by the role to be deployed is a controller node, the role to be deployed is correspondingly deployed to the target controller node.

The node type attribute refers to a node type supported by the role, such as a controller node and/or a compute node. The identifier information of the controller node refers to relevant information used to uniquely represent the identity of the controller node, such as a serial number, an address, and a name address of the controller node. Here, the deployment instruction may refer to a role configuration parameter carrying identifier information of the target controller node. When a user inputs the identifier information of the controller node and determines, according to the node type attribute, that a node type supported by the role is a controller node, the corresponding role can be automatically deployed to the target controller node. When the role to be deployed is correspondingly deployed to the target controller node according to the node type supported by the role, the operation may also be performed according to a controller node group. In such a case, the deployment instruction is acquired as identifier information of the target controller node group. During deployment of a cloud platform, the user may predefine a controller node group including a plurality of controller nodes and assign an identifier to the controller node group, and select a target controller node group by inputting the identifier information of the controller node group to be deployed, so as to uniformly deploy the designated role into the target controller node group at a time. The designated role may be determined according to the node type attribute in the role attribute, and when it is determined according to the node type attribute that a node type supported by the role is a controller node, the corresponding role may be automatically deployed to the target controller node group.

Referring to Fig. 4 again, still taking an OpenStack cloud platform as an example, a user may pre-define a controller node group denoted as Controller Group 1, and pre-define a node type supported by the node type attribute in the role attribute of each role in the Service Roles as a controller node. During deployment of a cloud platform, a deployment instruction may be acquired based on a user input of the identifier information corresponding to the controller node group, i.e., Controller Group 1; or on the premise that the target controller node group is uniquely determined, a deployment instruction may be acquired based on a triggering operation on a deployment button, which triggers automatic deployment of all roles in the Service Roles to the controller node group. The acquisition of the deployment instruction does not require complex configuration of a user, thereby improving deployment efficiency and usability.

In some embodiments, before the role to be deployed is correspondingly deployed to the target controller node, the following operations are included.

According to a dependence attribute in the role attribute, a dependence role and resource of the corresponding role are determined, and role dependency data is generated.

According to the role dependency data, a role configuration parameter carrying identifier information of the dependence role and resource of the corresponding role is acquired.

After the role to be deployed is correspondingly deployed to the target controller node, the method includes the following operations. A deployment sequence is determined according to the role dependency data. The role is activated according to the role configuration parameter based on the deployment sequence.

The dependence attribute refers to a dependence role and resource of the corresponding role. Deployment of a certain role may be dependent on other roles, such as components and services, or dependent on other resources, such as a database. Other roles or other resources on which the role needs to be dependent are represented by the dependence attribute, and are used in the generation of role dependency data at a deployment node, so as to form a complete deployment sequence. The role dependency data may be in the form of a list, for example, may be correspondingly formed into a role dependency list; alternatively, the role dependency data may be in the form of a tree diagram, for example, may be correspondingly formed as a role dependency relationship tree. The identifier information of the dependence role and resource of the corresponding role refers to information used to uniquely represent the identity of the corresponding role and resource. For example, the identifier information representing the role may be a server address, and the identifier information representing the resource may be a database identifier. By generating the role dependency data according to the dependence attribute in the role attribute, during deployment of a cloud platform, the dependence role and resource of the corresponding role are determined according to the dependence attribute definition of the role. Before the role to be deployed is deployed to the target controller node, the role configuration parameter conforming to the definition of the dependence role and resource may be acquired correspondingly based on the human-computer interaction. For example, the role configuration parameter containing of the identifier information of the database and the message server are acquired according to the corresponding definition of the dependence attribute. The role configuration parameter may be acquired through human-computer interaction, for example, the role configuration parameter conforming to the definition of the dependence role and resource may be received through a parameter configuration window provided by a software application interface; or the role configuration parameter may be acquired by receiving, through a parameter selection list page provided by a software application interface, a selected dependence role and resource displayed in the page.

The role dependency data is used for representing a dependency relationship between a role and a resource that need to be depended upon during role deployment. The operation that the deployment sequence is determined according to the role dependency data, and the role is activated according to the role configuration parameter based on the deployment sequence may be implemented in the following manner. According to the dependency relationship between each role and the dependence role and resource of each role in the role dependency data, the deployment sequence of respective roles is determined and formed into a role dependency relationship tree. By traversing the role dependency relationship tree, a role activation interface is successively invoked to activate the roles. For example, the dependence attribute of the role A defines that the dependence role corresponding to the role A is the role B, that is, the deployment of the role A requires the deployment of the role B to be completed first, therefore it can be determined, according to the role dependency data formed according to the dependence attribute of the role A, that the deployment sequence is that the role B should be deployed before the role A, and so on. In this way, a complete deployment sequence of all roles can be formed.

In the embodiments of the present disclosure, by correspondingly acquiring, according to the definition of the dependence attribute in the role attribute, the role configuration parameter containing the identifier information of the dependence role and resource complying with the definition of the dependence attribute, it is convenient to perform the following operations. The role to be deployed is dragged to a target controller node or a target controller node group, for example, the corresponding role is automatically dragged to the target controller node group according to the node type attribute of the role. According to a deployment sequence determined by the role dependency data, the active application programming interface (API) of the role is invoked according to the corresponding role configuration parameter based on the deployment sequence to activate the role, and the corresponding deployment of the role to be deployed to the target controller node is completed.

In some embodiments, before the role to be deployed is correspondingly deployed to the target controller node, the method further includes an operation that address information carrying a floating IP is acquired as a role configuration parameter of the role to be deployed.

The identifier information of the dependence role and resource, i.e., the floating IP, refers to an IP address which is public and can be accessed, and is not automatically allocated to a physical device. Generally, a physical device may have an automatically allocated static IP for communication between devices of an internal network, and the internal network uses private addresses which cannot be routed, the use of the floating IP enables a service of the physical device of the internal network to be identified and accessed by an external network. By setting the floating IP, it is possible to replace physical devices in an internal network without delay and provide services externally. The role configuration parameter containing the floating IP address may be acquired by means of human-computer interaction, for example, the role configuration parameter may be acquired by receiving a floating IP address input through a parameter configuration window provided by a software application interface; or the role configuration parameter may be acquired by receiving a selection for the floating IP address through a parameter selection list page provided by a software application interface, etc.

It should be noted that, during deployment of a cloud platform, a role deployment stage may be included first, that is, a role is dragged to a target controller node or a controller node group based on a node type attribute of the role. A service activation stage is further included after the role deployment stage, that is, configuration parameters are acquired by means of man-machine interaction, so as to form a parameter list conforming a role requirement and adaptive to different personalized roles. In the embodiments, the configuration parameters include identifier information of dependence roles and resources correspondingly configured for the role to be deployed, and corresponding IP address information configured for the role to be deployed, so as to satisfy different performance requirements of the roles after the roles are activated based on the configuration parameters. Acquiring a corresponding configuration parameter by means of human-computer interaction may be considered as acquiring a deployment instruction for executing service activation. In this way, the role dependency data is traversed after the role to be deployed is dragged to the target controller node or the target controller node group, an Application Programming Interface (API) for activation corresponding to the role is invoked, and role activation is performed based on the described parameter list, so as to correspondingly deploy the role to be deployed to the target controller node or the target controller node group.

In some embodiments, the operation of activating the role according to the role configuration parameter based on the deployment sequence may be implemented in the following manner. A corresponding role activation interface is invoked based on the deployment sequence according to the role configuration parameter and a role operation attribute in the role attribute, so as to activate the role.

The role operation attribute refers to a group of role operation methods corresponding to the role, and includes API interfaces for activation, migration and deactivation, etc., and data parameter definitions corresponding to the API interfaces. The definition of the role operation attribute makes it convenient to correspondingly execute a designated operation on a role according to the role attribute, thereby realizing rapid deployment. During deployment of a cloud platform, after a role to be deployed is dragged to a target controller node or a target controller node group, a configuration parameter complying with a role requirement can be acquired by means of human-computer interaction, role dependency data is generated according to the role attribute to further determine a deployment sequence, and the role dependency data is traversed so as to activate the role by invoking an API for activation corresponding to the role based on the deployment sequence and transmitting parameters based on a corresponding parameter list. In this way, the role to be deployed is correspondingly deployed to the target controller node or the target controller node group.

In some embodiments, when correspondingly deploying a role to be deployed to a controller node, the deployment operation is performed based on a controller node group. Correspondingly, the following operations are included before correspondingly deploying the role to be deployed to the target controller node group.

A selection instruction of controller node hosts is acquired.

The corresponding controller node hosts are formed into the controller node group according to the selection instruction.

Here, each controller node group may respectively include a designated number of controller node hosts. The selection instruction of the controller node hosts may be acquired by receiving controller node host identifiers input through a parameter input window provided by a software application interface; or the selection instruction of the controller node hosts may be acquired by receiving, through a controller node host list page provided by a software application interface, a selection operation on controller node hosts displayed in the controller node host list page. The controller node group is defined correspondingly according to the selection instruction of the controller node hosts.

Please refer to Fig. 5, which is a schematic diagram of role migration in a controller node capacity expansion scenario according to some embodiments of the present disclosure. In Fig. 5, the controller node groups include a Controller Group 1 and a Controller Group 2 which respectively include different controller node hosts. Controller node group 1 includes Controller Node 1, Controller Node 2 and Controller Node 3, and controller node group 2 includes Controller Node 4, Controller Node 5 and Controller Node 6. During deployment of a cloud platform, the Controller Group 1 may be defined by selecting a Controller Node 1, a Controller Node 2 and a Controller Node 3, and the Controller Group 2 may be defined by selecting a Controller Node 4, a Controller Node 5 and a Controller Node 6. The deployment operation may be performed in groups based on the controller node group, and scenarios where different controller node groups include different quantities of controller node hosts are supported, thereby simplifying deployment complexity during server distributed deployment.

In some embodiments, the operation of acquiring the deployment instruction may include acquiring a role migration instruction carrying identifier information of a role to be migrated.

The operation of correspondingly deploying, according to the deployment instruction and the node type attribute and/or the role aggregation attribute in the role attribute, the role to be deployed to the target controller node includes the following operations.

In a case where the role attribute includes the role aggregation attribute and it is determined, according to the role aggregation attribute based on the role migration instruction, that the role to be migrated is an aggregated role and the role to be migrated is to be partially migrated.

Sub-role list information associated with the role to be migrated is unfolded, and a sub-role to be migrated is selected based on the sub-role list information, and is migrated to the target controller node.

The role aggregation attribute refers to an attribute for representing a role as an aggregated role including a plurality of sub-roles or as a non-aggregated role. By adding the role aggregation attribute, a plurality of roles having specific association can be associated and defined to form an aggregated role, wherein the plurality of roles included in the same aggregated role are correspondingly referred to as sub-roles. The identifier information of the role to be migrated refers to relevant information that can uniquely represent the identity of the role to be migrated. Here, the deployment instruction refers to a role migration instruction carrying the identifier information of the role to be migrated. When it is determined that a corresponding role to be migrated is an aggregated role according to the role migration instruction, sub-role list information associated with the role to be migrated is unfolded, a selection instruction made based on the sub-role list information is acquired, and the corresponding sub-roles to be migrated are migrated to the target controller node, so as to correspondingly realize partial migration for the aggregated role.

The operation of acquiring the role migration instruction carrying the identifier information of the role to be migrated may be implemented in, but is not limited to, the following manners. First, a role migration instruction carrying identifier information of a role to be migrated may be acquired by receiving, through a role list page provided by a software application interface, a selection and dragging operation performed on the role to be migrated displayed in the role list page. Second, a role migration instruction carrying the identifier information of the role to be migrated may be acquired by receiving, through a role information window provided by a software application interface, input identifier information of the role to be migrated and confirmation on the input identifier information. Third, a role migration instruction carrying the identifier information of the role to be migrated may be acquired by receiving a touch operation on a role migration virtual key among role migration virtual keys provided correspondingly for respective roles through a software application interface. Fourth, a role migration instruction carrying the identifier information of the corresponding role to be migrated may be acquired by firstly receiving a trigger instruction for role migration through role migration virtual keys provided by a software application interface, and then receiving, based on a role list page, a selection operation for the role to be migrated, or receiving, based on a role information window, input identifier information of the role to be migrated.

In the embodiments of the present disclosure, the role aggregation attribute is added to the role attribute to support multi-role aggregation to form an aggregated role, so that the migration deployment operation can be correspondingly supported for an aggregated role including multiple roles. During deployment of a cloud platform, the aggregated role may be deployed integrally, so that the deployment of all the sub-roles included in the aggregated role can be completed at one time. Alternatively, the sub-roles associated with the aggregated role may be deployed according to different practical needs, and the selection and deployment for a part of the sub-roles are supported. In this way, by supporting role aggregation and adopting an aggregated role to realize integral migration or partial migration, deployment objectives of different requirements can be satisfied, deployment operations can be reduced, flexible service migration and extension are realized, deployment complexity is simplified, and deployment efficiency is improved.

When the role to be migrated is migrated to the target controller node according to the role aggregation attribute, the migration operation may also be performed based on a controller node group. Correspondingly, the operation of migrating the sub-roles to be migrated to the target controller node according to the selection instruction may be embodied as an operation of migrating the sub-roles to be migrated to the target controller node group according to the selection instruction.

Referring to Fig. 5 again, still taking an OpenStack cloud platform as an example, during deployment of a cloud platform, partial migration for an aggregated role Controller in a controller node extension scenario may be supported. First of all, a Controller Group 1 is defined based on Controller Node 1, Controller Node 2 and Controller Node 3. After the initial deployment is completed, for example, after automatic deployment is completed based on the node type attribute in the role attribute of each role, the same Service Roles are respectively deployed in Controller Node 1, Controller Node 2 and Controller Node 3 in a Controller Group 1. The Service Roles includes sub-roles as follows: Identity, Image, network_L2, network_L3, Rabbit MQ, MariaDB, MangoDB, Controller, and Other Common Roles and Services. For the requirement of capacity expansion, a new Controller Group 2 is defined based on newly added Controller Node 4, Controller Node 5 and Controller Node 6. A role migration instruction carrying an aggregated role Controller is acquired. Sub-list information associated with the aggregated role Controller is unfolded. A selection instruction for the sub-roles to be migrated, e.g., for the controller_nova, the controller_cinder, the controller_neutron and the controller_ironic is acquired based on the sub-list information. The controller_nova, the controller_cinder, the controller_neutron and the controller_ironic to be migrated are migrated to the target Controller Group 2 according to the selection instruction. In this way, partial migration for the aggregated role Controller is realized.

In some embodiments, after the selected sub-role to be migrated is migrated to the target controller node according to the sub-role list information, the following operations are included.

A corresponding role deactivation interface is invoked on an original controller node where the sub-role to be migrated is located to deactivate the sub-role to be migrated.

A corresponding role activation interface is invoked on the target controller node to activate the sub-role to be migrated.

Deactivation refers to an operation that terminates the activation state. In the solution of migrating a role during deployment of a cloud platform, after dragging a corresponding sub-role to be migrated to a corresponding target controller node, the method may further include an operation of re-aggregating the migrated role according to the role aggregation attribute, and updating the aggregated role. After the corresponding sub-role to be migrated is dragged to the corresponding target controller node, the method may further include an operation of performing deactivation on the original controller node where the sub-role to be migrated is located, and performing activation on the target controller node where the migrated sub-role is located. After receiving the migration operation of selecting the sub-role to be migrated to control the migration of the sub-role to the target controller node, a corresponding migration parameter is generated based on the migration operation and is carried in the migration operation. The migration parameter includes identifier information of an original controller node where the sub-role to be migrated is located and identifier information of the target controller node to which the sub-role is migrated. According to the migration parameter, a corresponding Application Programming Interface (API) may be correspondingly invoked on the original controller node where the role to be migrated is located, so as to deactivate the role to be migrated. Then, a corresponding role activation interface is invoked on the target controller node, so as to activate the sub-role to be migrated, thereby completing role migration.

When the sub-role to be migrated is migrated to the target controller node according to the role aggregation attribute, the migration operation may alternatively be performed based on a controller node group. Correspondingly, after the corresponding sub-role to be migrated is dragged to the corresponding target controller node group, the deactivation and activation operations of the sub-role to be migrated are also performed based on the controller node group. The specific process is described as follows. Deactivation is performed on the original controller node group where the sub-role to be migrated is located, and activation is performed on the target controller node group where the migrated sub-role is located. The migration parameter corresponding to the migration operation includes identifier information of the original controller node group where the sub-role to be migrated is located and identifier information of the target controller node group to which the sub-role to be migrated is migrated.

In some embodiments, the operation of correspondingly deploying, according to the deployment instruction and the node type attribute and/or the role aggregation attribute in the role attribute of the set role, the role to be deployed to the target controller node may further include the following operations.

In a case where the role attribute includes the role aggregation attribute, it is determined, according to the role aggregation attribute, that the role to be migrated is a non-aggregated role; or it is determined, according to the role aggregation attribute, that the role to be migrated is an aggregated role and the role to be migrated is to be integrally migrated.

The role to be migrated is correspondingly migrated to the target controller node.

The role aggregation attribute refers to an attribute for representing a role as an aggregated role including a plurality of sub-roles or as a non-aggregated role. By adding the role aggregation attribute, a plurality of roles having specific association can be associated and defined to form an aggregated role, wherein the plurality of roles included in the same aggregated role are correspondingly referred to as sub-roles. When it is determined, according to the role migration instruction, that the corresponding role to be migrated is a non-aggregated role, the role to be migrated is migrated to the target controller node correspondingly. Alternatively, when it is determined, according to the role migration instruction, that the corresponding role to be migrated is an aggregated role and the role to be migrated is to be migrated integrally, the role to be migrated is correspondingly migrated to the target controller node.

When the role to be migrated is migrated to the target controller node according to the role aggregation attribute, the migration operation may also be performed based on a controller node group. Correspondingly, the operation of correspondingly migrating the role to be migrated to the target controller node may be embodied as an operation of correspondingly migrating the role to be migrated to the target controller node group.

Referring to Fig. 5 again, still by taking an OpenStack cloud platform as an example, during deployment of a cloud platform, migration based on a controller node group may be supported for non-aggregated roles network_L2 and network_L3 in a controller node extension scenario. When a cloud platform is initially deployed, a Controller Group 1 is first formed according to definitions of Controller Node 1, Controller Node 2 and Controller Node 3. After the initial deployment is completed, for example, after automatic deployment is completed based on the node type attribute in the role attribute of each role, the same Service Roles are respectively deployed in Controller Node 1, Controller Node 2 and Controller Node 3 in a Controller Group 1. The Service Roles includes sub-roles as follows: Identity, Image, network_L2, network_L3, Rabbit MQ, MariaDB, MangoDB, Controller, and Other Common Roles and Services. For the requirement of capacity expansion, a new Controller Group 2 is defined based on newly added Controller Node 4, Controller Node 5 and Controller Node 6. By acquiring a role migration instruction carrying non-aggregated roles network_L2 and network_L3, the non-aggregated roles network_L2 and network_L3 are migrated to a target Controller Group 2, thereby realizing direct migration for the non-aggregated roles network_L2 and network_L3. It should be noted that, the integral migration for an aggregated role is the same as the migration for a non-aggregated role. By acquiring a role migration instruction indicating integral migration of an aggregated role Controller, the aggregated role Controller can be migrated to a target Controller Group 2, thereby implementing direct integral migration for the aggregated role Controller.

In the embodiments of the present disclosure, during deployment of a cloud platform, a role to be migrated is determined according to a role migration instruction. When it is determined that the role to be migrated is a non-aggregated role, the role to be migrated is migrated to a corresponding target controller node or target controller node group. When it is determined that the role to be migrated is an aggregated role, it is further determined whether the role to be migrated is to be integrally migrated or partially migrated. When the role to be migrated is to be integrally migrated, the role to be migrated is migrated to a corresponding target controller node or target controller node group. When the role to be migrated is to be partially migrated, sub-role list information included in the aggregated role is unfolded, a selection instruction on the sub-role is acquired based on the sub-role list information, and the sub-role is migrated to a corresponding target controller node or target controller node group according to the selection instruction. In this way, the definition and operation of a role during cloud platform deployment are supported by adding a role aggregation attribute to a role attribute, so that the deployment of an aggregated role is supported in a large-scale scenario, thereby realizing flexible role deployment. In other scenario applications, the integral deployment of an aggregated role is also supported, thereby simplifying the definition of roles and improving the deployment efficiency.

In some embodiments, after correspondingly migrating the role to be migrated to the target controller node, the following operations are included.

A corresponding role deactivation interface is invoked on an original controller node where the role to be migrated is located to deactivate the role to be migrated.

A corresponding role activation interface is invoked on the target controller node to activate the role to be migrated.

Deactivation refers to an operation that terminates the activation state. In the solution of migrating a role during deployment of a cloud platform, after dragging a corresponding role to be migrated to a corresponding target controller node, the method may further include an operation of re-aggregating the migrated role. The corresponding role to be migrated may refer to the aggregated role as a whole, a non-aggregated role or a sub-role. After dragging the corresponding role to be migrated to the corresponding target controller node, the method may further include an operation of performing a deactivation operation on an original controller node where the role to be migrated is located, and performing an activation operation on the target controller node where the role to be migrated has migrated. After the migration operation of correspondingly migrating the role to be migrated to the target controller node is completed, the role to be migrated corresponding to the migration operation may carry a corresponding migration parameter, wherein the migration parameter includes identifier information of an original controller node where the role to be migrated is located and identifier information of a target controller node to which the migrated role is located. After the corresponding migration of the role to be migrated to the target controller node, a corresponding role deactivation interface may be invoked on the original controller node where the role to be migrated is located according to the migration parameter so as to deactivate the role to be migrated; and a corresponding role activation interface may be invoked on the target controller node so as to activate the role to be migrated, thereby completing the role migration.

When the role to be migrated is migrated to the target controller node according to the role aggregation attribute, the migration operation may alternatively be performed based on a controller node group. Correspondingly, after the corresponding role to be migrated is dragged to the corresponding target controller node group, the deactivation and activation operations of the role to be migrated are also performed based on the controller node group. The specific process is described as follows. Deactivation is performed on the original controller node group where the role to be migrated is located, and activation is performed on the target controller node group where the migrated role is migrated. The migration parameter corresponding to the migration operation includes identifier information of the original controller node group where the role to be migrated is located and identifier information of the target controller node group to which the role to be migrated is migrated.

In some embodiments, the method may further include an operation of predefining each role in the cloud platform and a role attribute corresponding to the each role. The role attribute includes at least one of a node type attribute and a role aggregation attribute. The role attribute includes an identity attribute, a dependence attribute, a service attribute, a node type attribute, a role aggregation attribute and a role operation attribute.

A role refers to group definition based on related services and components included in a cloud computing management system. For example, a specific combination of services may be defined as a specific role, and each role may be used for representing an abstraction of a group of services. The role attribute refers to a description of the role from an abstract aspect, and is used for representing a relationship between the features of the role and the role. The node type attribute is used for representing a node type supported by the role, such as a controller node and/or a compute node. The role aggregation attribute is used for representing whether the role is an aggregated role or a non-aggregated role, wherein the same aggregated role may include a plurality of specified associated sub-roles. The identity attribute refers to relevant information used for representing the identity of a role, such as a role name and description information. The dependence attribute is used for representing the dependence role and resource corresponding to the role, for example, representing identifier information of other roles or of other resources on which the deployment of the role needs to be dependent. The service attribute refers to a service list and a service operation mode contained in the role. The service operation mode mainly includes a High Availability (HA) service operation mode or a Load Balance (LB) service operation mode. The role operation attribute is used for representing a group of role operation methods corresponding to the role, and includes API interfaces for activation, migration and deactivation, etc., and data parameter definitions corresponding to the API interfaces.

In the embodiments of the present disclosure, a role and a role attribute are defined. The role attribute includes a node type attribute, and a node type supported by a corresponding role can be determined based on the node type attribute, so that automatic deployment of the role to a target controller node or a target controller node group can be completed directly according to the node type supported by the role. The role attribute includes a role aggregation attribute, and a sub-role associated with a corresponding role can be determined based on the role aggregation attribute, so that integral migration or partial migration of an aggregated role and re-aggregation after migration can be completed according to the role aggregation attribute of the role. The role attribute includes a role operation attribute, so that a group of operation methods corresponding to the role can be determined, for example, operation methods of activation, migration, and deactivation, and an API interface and a corresponding parameter definition required for correspondingly executing an operation method can be determined. During deployment of a cloud platform, when a bottleneck exists in some roles in different scenarios, a controller node can be expanded, a role type can be determined based on a role attribute, and a role can be migrated according to a corresponding method. With regard to a non-aggregated role, the role can be directly migrated from an original controller node group to a target controller node group. With regard to an aggregated role, if the aggregated role is to be integrally migrated, the aggregated role can be directly migrated from the original controller node group to the target controller node group; and if the aggregated role is to be partially migrated, the aggregated role can be unfolded so that the sub-role needing to be migrated can be selected and then migrated to a target controller node group, and then after migration, re-aggregation can be performed at the controller node group and the target controller node group according to the role aggregation attribute of the role.

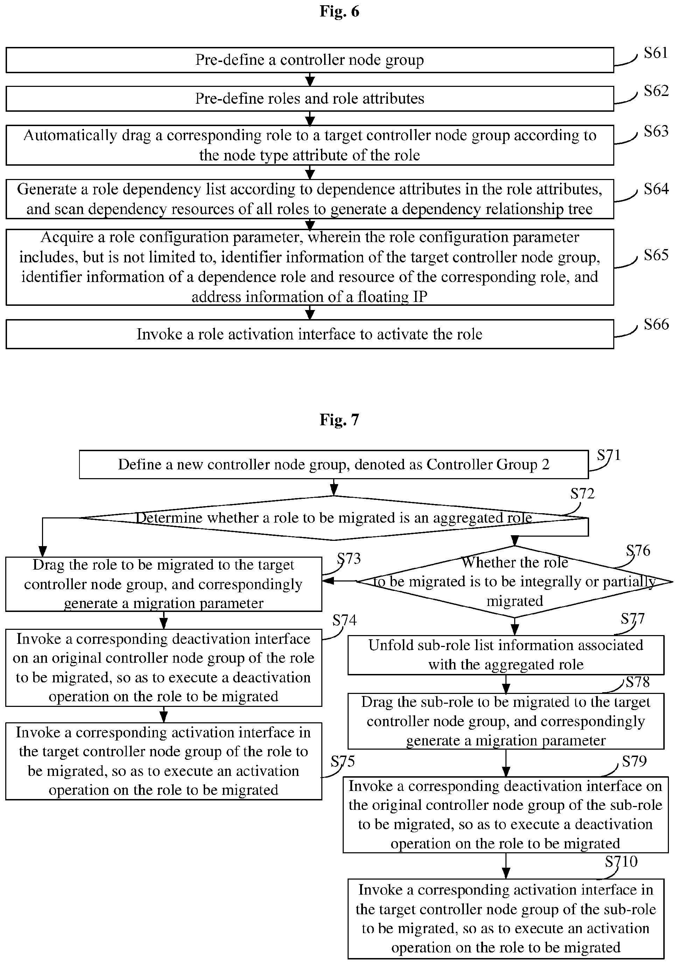

To facilitate the further understanding about the implementation process of the cloud platform deployment method provided in the embodiments of the present disclosure, the following describes, based on examples, a cloud platform deployment method in a typical scenario and a cloud platform deployment method in a controller node capacity expansion scenario respectively. Referring to Fig. 6, the cloud platform deployment method includes operations S61 to S66 which are described below in detail.

At operation S61, a controller node group is pre-defined. One or more controller node host may be selected, for example, 1-3 servers can be selected and defined as a Controller Group 1 of the cloud platform according to a practical environment.

At operation S62, roles and role attributes are pre-defined. The definition can be performed in groups according to components and services in the cloud platform, and a specific service combination is correspondingly defined as a role. Taking the OpenStack cloud platform as an example, referring to Fig. 3 again, the Service Roles may be defined to include: Identity, Image, network_L2, network_L3, RabbitMQ, MariaDB, MangoDB, Controller, and Other Common Roles and Services. The Controller is an aggregated role, and sub-roles correspondingly associated with the Controller include: Controller_nova, Controller_cinder, Controller_neutron, Controller_ironic, Controller_heat, Controller_backup, Controller_telemetry, and Other Controller Roles and Services.

At operation S63, a corresponding role is automatically dragged to a target controller node group according to the node type attribute of the role. The operation of automatically dragging the corresponding role to the target controller node group according to the node type attribute of the role may be executed based on a deployment instruction. The deployment instruction may be acquired by receiving, by means of human-computer interaction, a touch operation on a deployment virtual key among deployment virtual keys provided by a software application interface; or may be acquired by receiving input identifier information of the target controller node group and confirmation on the input identifier information through an input window provided by a software application interface. Taking the OpenStack cloud platform as an example, referring to Fig. 4 again, according to the definition of the controller node group and the definition of the role, the node type attributes of all roles in the Service Roles include the support on controller nodes, and all roles in the Service Roles are automatically deployed to the Controller Group 1.

At operation S64, a role dependency list is generated according to dependence attributes in the role attributes, and dependency resources of all the roles are scanned to generate a dependency relationship tree. The dependency relationship tree refers to a tree diagram formed by taking roles, resources, and the like as nodes and representing a dependency between the nodes through a connection line before the nodes. By forming the dependency relationship tree, it is convenient to traverse and execute a role activation operation according to the dependency relationship tree, so as to form a complete deployment sequence relationship.

At operation S65, a role configuration parameter is acquired, wherein the role configuration parameter includes, but is not limited to, identifier information of the target controller node group, identifier information of a dependence role and resource of the corresponding role, and address information of a floating IP. The identifier information of the target controller node group may refer to a host group and a host list corresponding to the landing of the role to be deployed. The corresponding identifier information of the dependence role and resource may identify the dependence role and the dependence resource required in the definition of the corresponding dependence attribute of the role to be deployed, such as the configuration information corresponding to the database and the message server. Here, the role configuration parameter may be acquired through human-computer interaction, and the acquired corresponding role configuration parameter may be used as a deployment instruction for executing a role activation operation in a cloud platform deployment process.

At operation S66, a role activation interface is invoked to activate the role. According to a role attribute corresponding to the role to be deployed, a corresponding role activation interface is invoked, the described role configuration parameter is transmitted, and a dependency relationship tree is traversed to complete role activation.

The cloud platform deployment method provided in the described embodiments is mainly applicable to a service deployment process of a cloud platform in a typical scenario. By adding a node type attribute to a role attribute, and directly dragging a corresponding role to a controller node group according to the node type attribute, unified deployment is realized based on the role node type attribute, and the deployment efficiency and usability can be improved. Furthermore, operations of all roles are performed based on the controller node group, which can ensure the consistency in the configuration of the roles of all hosts in the same controller node group, thereby simplifying the deployment complexity.

The cloud platform deployment method in a controller node capacity expansion scenario mainly includes a role migration scheme in the controller node capacity expansion scenario, which may be based on a cloud platform architecture that has been initially deployed. For example, in the cloud platform architecture that has been initially deployed by using the cloud platform deployment method shown in Fig. 6, the role migration may be executed based on a controller node capacity expansion requirement. Referring to Fig. 7, the cloud platform deployment method includes operations S71 to S710 which are described in detail as follows.

At operation S71, a new Controller Group 2 is defined. The new controller node group may be defined by selecting one or more new nodes. Because operations of all roles are based on the controller node group, the definition of the controller node group is completed by selecting one or more new nodes , so as to prepare for subsequent role operations.

At operation S72, it is determined whether a role to be migrated is an aggregated role, and if the role to be migrated is an aggregated role, operation S73 is executed, otherwise, operation S76 is executed. Here, the role to be migrated may be understood as a role to be deployed in the role migration scheme. The determination of the role to be migrated may be triggered according to different role migration instructions. For example, the role to be migrated may be determined by directly selecting and dragging the role based on a role list page, and a role migration instruction carrying identifier information of the role to be migrated can be acquired based on the selecting and dragging operation. In another example, a migration instruction may be acquired based on a touch operation on a role migration key, and a selection operation of the role to be migrated or input identifier information of the role to be migrated may be received based on the migration instruction, so as to correspondingly acquire a role migration instruction carrying the identifier information of the role to be migrated. In still another example, a selection operation of the role to be migrated and a touch operation on a role migration key may be received based on a role list page, so as to acquire a role migration instruction carrying the identifier information of the role to be migrated.

At operation S73, the role to be migrated is dragged to the target controller node group, and a migration parameter is correspondingly generated. The migration parameter includes an original controller node group and host list where the role to be migrated is located, and a target controller node group and host list to which the role to be migrated is migrated.

At operation S74, a corresponding deactivation interface is invoked on the original controller node group of the role to be migrated, so as to execute a deactivation operation on the role to be migrated.

At operation S75, a corresponding activation interface is invoked on a target controller node group of the role to be migrated, so as to execute an activation operation on the role to be migrated.

At operation S76, in a case of determining that the role to be migrated is an aggregated role, it is determined whether the role to be migrated is to be integrally migrated or partially migrated. If the role to be migrated is to be integrally migrated, operation S73 is performed; and if the role to be migrated is to be partially migrated, operation S77 is performed.

At operation S77, sub role list information associated with the aggregated role is unfolded.

At operation S78, the sub-role to be migrated is dragged to the target controller node group, and a migration parameter is correspondingly generated. The migration parameter includes an original controller node group and host list where the sub-role to be migrated is located, and a target controller node group and host list to which the sub-role to be migrated is migrated.

At operation S79, a corresponding deactivation interface is invoked on the original controller node group of the sub-role to be migrated, so as to execute a deactivation operation on the role to be migrated.

At operation S710, a corresponding activation interface is invoked on the target controller node group of the sub-role to be migrated, so as to execute an activation operation on the role to be migrated.

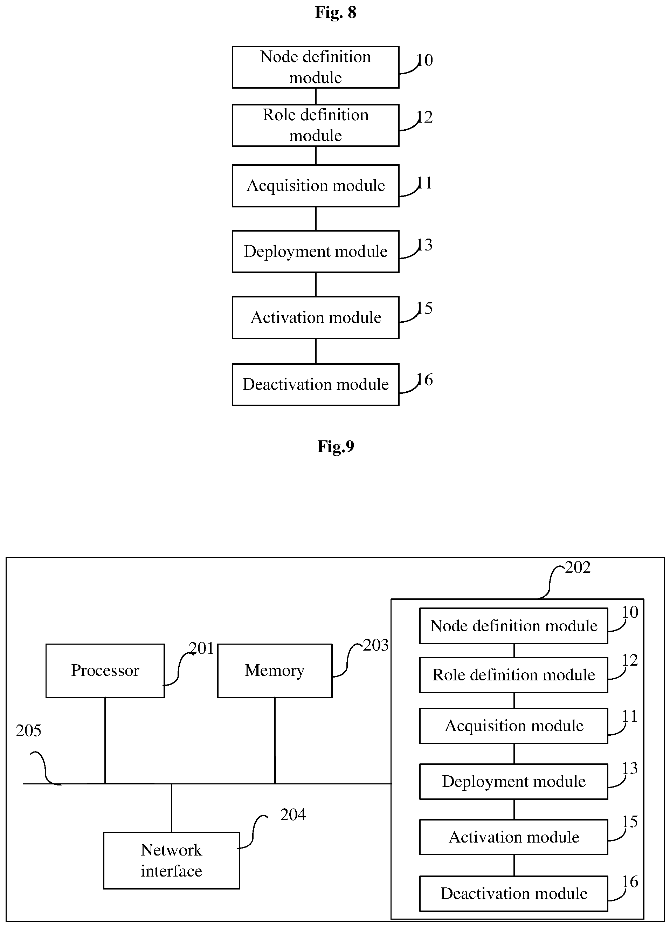

The cloud platform deployment method provided in the described embodiments is mainly applicable to a role migration scheme in a service deployment process of a cloud platform in a controller node capacity expansion scenario. By means of adding a role aggregation attribute to a role attribute, aggregated role expansion can be supported in a large-scale scenario so as to achieve flexible role deployment, and aggregated role deployment can be adopted during a typical scenario application so as to reduce the complexity of role configuration. In addition, controller nodes are managed in groups, and operations of all roles are performed based on a controller node group, thereby ensuring the consistency in the configuration of roles of all hosts in the same controller node group, simplifying environment deployment and improving ease of use. Please refer to Fig. 8, according to another aspect, some embodiments of the present disclosure provide a cloud platform deployment apparatus, including: an acquisition module 11, configured to acquire a deployment instruction; and a deployment module 13, configured to correspondingly deploy a role to be deployed to a target controller node according to the deployment instruction and a node type attribute and/or a role aggregation attribute in a role attribute of a set role.

In some exemplary implementations, the deployment module 13 is configured to, in a case where the role attribute includes the node type attribute and it is determined, according to the node type attribute, that a node type supported by the role to be deployed is a controller node, correspondingly deploy the role to be deployed to the target controller node.

In some exemplary implementations, the deployment module 13 is further configured to determine, according to a dependence attribute in a role attribute, a dependence role and resource of the corresponding role, and generate role dependency data. The acquisition module 11 is further configured to acquire, according to the role dependency data, a role configuration parameter carrying identifier information of the dependence role and a resource. The device may further include an activation module 15. The activation module 15 is configured to determine a deployment sequence according to the role dependency data, and activate the role according to the role configuration parameter based on the deployment sequence.

In some exemplary implementations, the acquisition module 11 is configured to acquire a role migration instruction carrying identifier information of a role to be migrated. The deployment module 13 is configured to, in a case where the role attribute includes the role aggregation attribute, determine, based on the role migration instruction and according to the role aggregation attribute, that the role to be migrated is an aggregated role and the role to be migrated is to be partially migrated, unfold sub-role list information associated with the role to be migrated, and based on the sub-role list information, select a sub-role to be migrated to the target controller node.

In some exemplary implementations, the apparatus may further include a deactivation module 16 and an activation module 15. The deactivation module 16 is configured to invoke a corresponding role deactivation interface on an original controller node where the sub-role to be migrated is located so as to deactivate the sub-role to be migrated. The activation module 15 is configured to invoke a corresponding role activation interface on the target controller node to activate the sub-role to be migrated.

In some exemplary implementations, the deployment module 13 is further configured to, in the case that the role attribute includes the role aggregation attribute, determine, according to the role aggregation attribute, that the role to be migrated is a non-aggregated role, or determine, according to the role aggregation attribute, that the role to be migrated is an aggregated role and the role to be migrated is to be integrally migrated; and correspondingly migrate the role to be migrated to the target controller node.

In some exemplary implementations, the apparatus may further include a deactivation module 16 and an activation module 15. The deactivation module 16 is configured to invoke a corresponding role deactivation interface on an original controller node where the role to be migrated is located, so as to deactivate the sub-role to be migrated. The activation module 15 is configured to invoke a corresponding role activation interface on the target controller node to activate the role to be migrated.

In some exemplary implementations, the deployment module 13 is configured to correspondingly deploy the role to be deployed to a target controller node group, wherein the target controller node group includes a plurality of controller nodes.

In some exemplary implementations, the apparatus may further include a node definition module 10, configured to acquire a selection instruction of controller node hosts, and form the corresponding controller node hosts into the controller node group according to the selection instruction.

In some exemplary implementations, the device may further include a role definition module 12, which is configured to pre-define each role in the cloud platform and the role attribute corresponding to each role. The role attribute includes at least one of: a node type attribute and a role aggregation attribute.

When the cloud platform deployment apparatus provided in the foregoing embodiments deploys a cloud platform, division of the foregoing program modules is only used as an example for description. In a practical application, the foregoing operations may be allocated to different program modules for implementation according to a requirement, that is, an internal structure of the apparatus may be divided into different program modules to complete all or a part of the processing described above. In addition, the cloud platform deployment apparatus provided in the foregoing embodiments follows the same concept as the cloud platform deployment method in the method embodiments. For a specific implementation process, reference may be made to the method embodiments, and details are not described herein again.

In another aspect, some embodiments of the present disclosure provide a server, which may belong to a deployment node or a controller node in a cloud platform. Referring to Fig. 9, the server includes a processor 201 and a storage medium 202 for storing a computer program capable of running on the processor 201. The processor 201 is configured to, when running the computer program, execute the operations of the cloud platform deployment method provided by any embodiment of the present disclosure. Herein, there may be one or more processors 201 and one or more storage mediums 202. The server may further include a memory 203, a network interface 204, and a system bus 205 connecting the processor 201, the memory 203, the network interface 204, and the storage medium 202. The storage medium 202 stores an operating system and a cloud platform deployment apparatus used for implementing the cloud platform deployment method provided in the embodiments of the present disclosure. The processor 201 is used for improving calculation and control capabilities and supporting the running of the whole server. The memory 203 is configured to provide an environment for running of the memory cache management method in the storage medium 202. The network interface 204 is configured for other nodes to perform network communication.

Some embodiments of the present disclosure provide a computer storage medium. The computer storage medium, for example, includes a memory storing a computer program. The computer program may be executed by a processor, so as to execute operations of the cloud platform deployment method provided by any embodiment of the present disclosure. The computer storage medium may be a memory such as an FRAM, an ROM, a PROM, an EPROM, an EEPROM, a Flash Memory, a magnetic surface memory, an optical disc, or a CD-ROM. The computer storage medium may also be various devices that include one or any combination of the foregoing memories.

The foregoing descriptions are merely exemplary embodiments of the present disclosure, but are not intended to limit the scope of protection of the present disclosure. Any variation or replacement readily figured out by a person having ordinary skill in the art within the technical scope disclosed in the present disclosure shall belong to the scope of protection of the present disclosure. The scope of protection of the present disclosure should be determined by the scope of protection defined by the appended set of claims.

## Claims

1. A cloud platform deployment method, comprising:
acquiring a deployment instruction; and
correspondingly deploying, according to the deployment instruction and a node type attribute and/or a role aggregation attribute in a role attribute of a set role, a role to be deployed to a target controller node.

2. The method according to claim 1, wherein correspondingly deploying, according to the deployment instruction and the node type attribute and/or the role aggregation attribute in the role attribute, the role to be deployed to the target controller node comprises:
in a case where the role attribute comprises the node type attribute and it is determined, according to the node type attribute, that a node type supported by the role to be deployed is a controller node, correspondingly deploying the role to be deployed to the target controller node.

3. The method according to claim 2, wherein before correspondingly deploying the role to be deployed to the target controller node, the method comprises:
determining, according to a dependence attribute in the role attribute, a dependence role and resource of the corresponding role, and generating role dependency data; and
acquiring, according to the role dependency data, a role configuration parameter carrying identifier information of the dependence role and resource of the corresponding role; and
after correspondingly deploying the role to be deployed to the target controller node, the method comprises:
determining a deployment sequence according to the role dependency data, and activating the role according to the role configuration parameter based on the deployment sequence.

4. The method according to claim 1, wherein acquiring the deployment instruction comprises:
acquiring a role migration instruction carrying identifier information of a role to be migrated; and
correspondingly deploying, according to the deployment instruction and the node type attribute and/or the role aggregation attribute in the role attribute of the set role, the role to be deployed to the target controller node comprises:
in a case where the role attribute comprises the role aggregation attribute, determining, according to the role aggregation attribute based on the role migration instruction, that the role to be migrated is an aggregated role and the role to be migrated is to be partially migrated; and
unfolding sub-role list information associated with the role to be migrated, and selecting, based on the sub-role list information, a sub-role to be migrated and migrating the selected sub-role to the target controller node.

5. The method according to claim 4, wherein after selecting, based on the sub-role list information, the sub-role to be migrated and migrating the selected sub-role to the target controller node, the method comprises:
invoking a corresponding role deactivation interface on an original controller node where the sub-role to be migrated is located to deactivate the sub-role to be migrated; and
invoking a corresponding role activation interface on the target controller node to activate the sub-role to be migrated.

6. The method according to claim 4, wherein correspondingly deploying, according to the deployment instruction and the node type attribute and/or the role aggregation attribute in the role attribute of the set role, the role to be deployed to the target controller node further comprises:
in a case where the role attribute comprises the role aggregation attribute, determining, according to the role aggregation attribute, that the role to be migrated is a non-aggregated role; or determining, according to the role aggregation attribute, that the role to be migrated is an aggregated role and the role to be migrated is to be integrally migrated; and
correspondingly migrating the role to be migrated to the target controller node.

7. The method according to claim 6, wherein after correspondingly migrating the role to be migrated to the target controller node, the method comprises:
invoking a corresponding role deactivation interface on an original controller node where the role to be migrated is located to deactivate the role to be migrated; and
invoking a corresponding role activation interface on the target controller node to activate the role to be migrated.

8. The method according to any one of claims 1 to 7, wherein correspondingly deploying the role to be deployed to the target controller node comprises:
correspondingly deploying the role to be deployed to a target controller node group, wherein the target controller node group comprises a plurality of controller nodes.

9. The method according to claim 8, wherein before correspondingly deploying the role to be deployed to the target controller node group, the method comprises:
acquiring a selection instruction of controller node hosts; and
forming the corresponding controller node hosts into the controller node group according to the selection instruction.

10. The method according to any of claims 1 to 7, further comprising:
pre-defining each role in a cloud platform and a role attribute corresponding to each role, wherein the role attribute comprises at least one of the following: a node type attribute and a role aggregation attribute.

11. A cloud platform deployment apparatus, comprising:
an acquisition module, configured to acquire a deployment instruction; and
a deployment module, configured to correspondingly deploy, according to the deployment instruction and a node type attribute and/or a role aggregation attribute in a role attribute of a set role, a role to be deployed to a target controller node.

12. A server comprising a processor and a memory for storing a computer program operable on the processor, wherein
the processor is configured to run the computer program to execute the cloud platform deployment method according to any one of claims 1 to 10.

13. A storage medium, wherein the storage medium stores an executable instruction, and the executable instruction is configured to, when being executed by a processor, perform the cloud platform deployment method according to any one of claims 1 to 10.
